# EUROPEAN PATENT APPLICATION

(11) **EP 2 645 380 A1**
(43) Date of publication of application: **02.10.2013**
(21) Application number: 12382124.1
(22) Date of filing: 30.03.2012
(51) Int. Cl.: H01C 7/112

(54) **A method for obtaining doped zinc oxide varistors, the product obtained by said method and its use**

(71) Applicant: Inael Electrical Systems, S.A., 45007 Toledo (ES)
(72) Inventor: Fernandez Hevia, Daniel, 45007 Toledo (ES)
(74) Representative: Capitán García, Maria Nuria

(57) **Abstract**

The object of this invention is a method for obtaining zinc oxide (ZnO) varistors doped at least with titanium and the varistors obtained by this method, as well as the use of such varistors. Varistors are particularly useful in energy-efficient devices for protection against overvoltage.

## Description

### TECHNICAL FIELD OF THE INVENTION

The object of this invention is a method for obtaining zinc oxide (ZnO) varistors doped at least with titanium and the varistors obtained by this method, as well as the use of such varistors. Varistors are particularly useful in energy-efficient devices for protection against overvoltage.

### BACKGROUND OF THE INVENTION

Varistors are ceramic semiconductor devices that are connected in parallel to equipment in order to protect it from sudden increases in electrical voltage in a system. Under normal operating conditions, the potential difference (pd) between the terminals of the equipment is at the so-called continuous operating voltage (Uc) of the varistor, a pd that the varistor can bear without damage or effect on its performance. Under this pd, the varistor essentially behaves as a parallel capacitor with great leakage resistance. The resistive current that flows through said resistor (called leakage current) is the current that is produced in the varistor by constant power dissipation, which is supplied by the grid and degrades as heat, which is thus lost, costing several million euros in Spain alone.

The essence of the so-called varistor behaviour is a very quick drop in the resistivity of the material, which depends on the pd applied in a very non-linear manner. Thus, when there is an overvoltage wave the varistor leads it through its own body and diverts it to the ground or earth connection before it reaches the equipment it is protecting. This effect is achieved by creating electrostatic barriers at the grain boundary that experience an exponential decrease according to the voltage applied.

There are different publications that characterise varistors, such as D. Fern ndez-Hevia et. al, Mott-Schottky behavior of strongly pinned double Schottky barriers and characterization of ceramic varistors, J. Appl. Phys. 92 (5), 2890-2898 (2002); and D. Fern ndez-Hevia et. al, Dominance of deep over shallow donors in ZnO-based varistors, Appl. Phys. Lett. 86 (13), 2692-2694 (2003).

Additionally, it is known that varistors may have admissible Uc power dissipations when operating in alternating current at industrial frequencies (50-60 Hz) and, however, dissipate enormous amounts of power when attempted to be made to operate under direct voltage (under DC conditions).

From the point of view of materials science, the ZnO varistors that currently dominate the market are complex ceramic materials consisting of a matrix of ZnO grains (80-90% by weight) and several secondary phases located at the grain boundary forming an interconnected frame. The ZnO grains are doped with certain cations, typically transition metals, that are included in order to form a solid solution, whereas the secondary phases comprise a continuous grain boundary phase that is rich in Bi and crystals of a Zn and Sb double oxide with a spinel-type structure that may also contain other dopants. In the typical composition of a varistor, the minority fraction of other dopant metal oxides includes CoO, MnO₂, Cr₂O₃, Bi₂O₃, and Sb₂O₃ amongst others. The amount of secondary phases, and thus the variety of interfaces with non-optimal potential barriers plays an essential role in the increase of power consumption in the varistor and in the decrease of its non-linearity.

Therefore, from what is known in the state of the art we can deduce that the development of varistors with low standby power consumption and that prevent losses in general and are energy efficient such that they minimise the dissipation and degradation of electrical power is of great interest. In this sense, the formulations most active ingredient towards the reduction of dopants and secondary phases, maximising interfaces with optimal barriers and preventing losses by ohmic conduction along the frame of secondary phases.

### DESCRIPTION OF THE INVENTION

The inventors have developed a procedure for synthesising varistors that allows controlling the chemical processes inside the material.

The varistors obtained by the method of the invention object of this invention maintain the condition of varistors with low losses whatever the voltage frequency applied, including direct current conditions. The varistors of the invention are energy efficient, with low losses both in alternating current and in direct current and with a metallic behaviour at radio and microwave frequencies.

Varistors are energy efficient, since conduction losses are reduced up to 60%.

Varistors obtained using the method of the present invention exhibit a non-dissipating and energy efficient behaviour under non-oscillating fields or with very low frequency (<1 MHz), which are usually considered as direct current.

Varistors are semiconductors, their ohmic resistance (proportional to the resistive component of the leakage current) increases with temperature. Varistors obtained by the method of the invention reverse this behaviour at the upper limit of radio frequencies and in the range of microwaves, i.e. when the frequency of the field applied is more than 1 GHz. At these frequencies, the varistor exhibits a metallic behaviour, with a resistive component of the leakage current that decreases (instead of increasing) as the temperature increases.

These favourable features are obtained thanks to the method of the invention.

Therefore, a first aspect of the invention relates to a procedure for preparing varistors comprising the steps of:
a) Forming an aqueous solution comprising ZnO at a molar percentage between 88% and 97%, using as dopants at least Bi₂O₃ at a molar percentage comprised between 0.2% and 4.5%, Sb₂O₃ at a molar percentage comprised between 1% and 5% and TiO₂ at a molar percentage comprised between 1% and 4%; a dispersing additive and a binding additive
b) Drying the mixture from step a)
c) Sieving it
d) Pressing the result
e) Sintering it in a cycle defined by a final
temperature comprised between 1140 C and 1180 C for a time comprised between 1-8 hours.

Thanks to the method of the invention, and more specifically to the starting products and the sintering cycle, the arrangement of the titanium dopants in the crystal lattice of ZnO, a wurtzite-like crystalline structure, is such that the dopants with the greatest capacity for forming electrostatic potential barriers are strongly anchored at the grain boundary, which plays a critical role when maintaining a high barrier that blocks the transport by conduction and reduces losses.

The development of these interactions takes place during the heat thermal of the method, which controls the microstructural development of the varistor and the evolution of the placing of the dopants in the ZnO crystal lattice.

Thus, a second aspect of the invention relates to a varistor obtained by the method of the invention.

Finally, a final aspect of the invention relates to the use of the varistors obtained by the method of the invention in the building of discreet components for microwave circuits.

### BRIEF DESCRIPTION OF THE DRAWINGS

This specification is supplemented with a set of drawings illustrating the preferred embodiment, which are never intended to limit the invention.
Figure 1 shows the XRD patterns of samples with different amounts of TiO₂. It shows ZnO ( ), Zn_{2.33}Sb_{0.67}O₄ ( ), BiO₂₋ₓ ( ) and Bi₂Ti₂O7( ).
Figure 2 shows the cell volume ( ³) versus the molar % TriO₂.
Figure 3 shows FESEM (Field Emission Scanning Electron Microscope) micrographies corresponding to samples with 0.9% and 2.6% of TiO₂ and an EDS spectrum corresponding to a sample with 0.4% TiO₂.
Figure 4 shows FESEM images of the sample without Ti (above) and with 2.6% of added titanium dioxide (below).
Figure 5 shows the grams of Ti⁴⁺ that are not found in the spinel crystalline structure versus the grams of titanium dioxide added.
Figure 6 shows the microstructural characterisation of the composition of the varistor doped with titanium dioxide and silicon dioxide. The phases identified in the XRD analysis are ZnO ( ), Zn_{2.33}Sb_{0.67}O₄ ( ), BiO₂₋ₓ ( ) and Zn₂SiO₄( ).

### DETAILED DESCRIPTION OF THE PREFERRED EMBODIMENT OF THE INVENTION

As we have described above, a first aspect of the invention is a method for preparing varistors comprising the steps of:
a) Forming an aqueous solution comprising ZnO at a molar percentage between 88% and 97%, using as dopants at least Bi₂O₃ at a molar percentage comprised between 0.2% and 4.5%, Sb₂O₃ at a molar percentage comprised between 1% and 5% and TiO₂ at a molar percentage comprised between 1% and 4%; a dispersing additive and a binding additive
b) Drying the mixture from step a)
c) Sieving it
d) Pressing the result
e) Sintering it in a cycle defined by a final
temperature comprised between 1140 C and 1180 C for a time comprised between 1-8 hours.

The term dispersing additive as used herein relates to a short chain organic compound with a hydrophobic terminal in order to be adsorbed to the surface of the metal oxide particles and a hydrophilic terminal to cause steric repulsion between both ends. Alkaline-free polyelectrolytes are commonly used.

The term binding additive as used herein relates to a long chain organic compound with two hydrophobic terminals that allow the formation of agglomerates between the particles, and their composition is commonly based on polyvinyl alcohol (PVA).

In a preferred embodiment the ZnO represents at least 85% in molar percentage with respect to the total metal oxides present.

In a preferred embodiment the dopants comprise SiO₂ at a molar percentage comprised between 0.25% and 1.25%. In another preferred embodiment the dopant comprises Co₃O₄, MnO₂, NiO, Fe₂O₃.

The starting size of the ZnO will have a great effect on the behaviour of the different powders prepared. In this sense, for the method to be efficient and cost effective, we must suit the particle size of the dopants to the average size of the ZnO, since a large difference in size between the particles of the different oxides may lead to great heterogeneity.

Therefore, in a preferred embodiment of the invention the method first comprises step a), a step of milling the dopant in order to homogenise the size of the ZnO and the dopants.

In a more preferred embodiment, the starting ZnO has an average size between 0.9 and 2 microns.

In a preferred embodiment step a) is performed in a high shear mixer with a Teflon-coated rotor and stator. The water is preferably distilled water.

In a preferred embodiment, in the solution of step a) the solids content falls within the range of 55-60% by weight of solids.

In this range we obtain viscosities of around 200 mPa s; higher percentages involve a large increase in the viscosity of the mixture, even above 700 mPa s.

In a preferred embodiment, in step a) of preparing the solution, we first add the dispersing additive into the distilled water and mix it at low speed, then we add the ground dopants and mix at low speed, we add the ZnO and mix at low speed, add the binding additive and mix at high shear speed.

In a preferred embodiment the pressing step is performed in tungsten carbide moulds.

In a preferred embodiment the sintering step has a final sintering temperature comprised between 1140 C and 1180 C and a time comprised between 1 and 4 hours with the samples exposed to the air.

The sintering step can also be performed in two steps, the first step is performed up to a temperature of 600 C with the samples exposed to the air and its aim is to eliminate the organic additives used to process the ceramic powder in a controlled manner, and the second step is performed up to a sintering temperature of 1140 C for between 2 and 4 hours, which is performed with the samples covered in order to minimise the volatilisation of bismuth oxide (III).

In a preferred embodiment the sintering step is performed in two steps, the first of which is performed up to a temperature of 600 C with the samples exposed to the air and the second step is performed up to a sintering temperature of 1140 C for between 2 and 4 hours, and which is performed with the samples covered.

### EXAMPLES

Different samples of the invention were prepared from the compositions described in Table 1.

**Table 1. Starting formulations studied (mole percent).**

| | EF2 | EF5 | EF6 |
|---|---|---|---|
| ZnO | 88-97 | 88-92 | 89-95 |
| Bi₂O₃ | 0.2-3.0 | 4.50 | 3.00 |
| Sb₂O₃ | 1-5 | 4.70 | 4.70 |
| Co₃O₄ | 0.4-1.8 | 1.80 | --- |
| MnO₂ | 0.5-0.70 | 0. 60 | 0. 60 |
| NiO | 0.3-0.5 | 0.35 | 0.35 |
| TiO₂ | 0.20-3.0 | 0.30-3.45 | 0.5-4.0 |
| SiO₂ | 0.0-1.25 | 0.25-1.25 | 0.5-2.0 |
| Fe₂O₃ | - | - | 1.80 |
| Sb₂O₃/Bi₂O₃ (mole) | 22.5 | 11.67 | 22.5 |

A paste with additives was prepared from the different mixtures for its subsequent mixing, drying and sieving and dry pressing. The correct preparation of the paste allowed reaching a high degree of homogeneity in the resulting mixture of oxides, which homogeneity is related to the size and the state of agglomeration of its constituent particles. The starting ZnO had an average size of between 0.9 and 2 microns, D_{(v,50)} = 0.90-2.00 m.

The different dopants in each formulation were ground together in an attrition grinder with balls of zirconia-ceria (φ = 1.2 2.4

As a grinding medium we used distilled water and as verified experimentally the optimal grinding time is 2 hours (longer times do not achieve noticeable reductions in particle size).

After said grinding the average particle size and the size distribution curve for the dopant mixture comes remarkably close to the values of the starting zinc oxide, which facilitates reaching a high degree of homogeneity in the preparation of the paste. Similarly, the data shown in Table 2, extracted from the curves, shows the similarity in sizes achieved with the grinding process. The table shows the data for the EF2 formulation, the remaining formulations showed similar values.

**Table 2. Particle size measurements for the EF2 formulation**

| | D(_{v,10}) m | D_{(v,50)} m | D_{(v,90)} m |
|---|---|---|---|
| ZnO | 0.35 | 1.14 | 3.33 |
| Ground dopants | 0.28 | 1.35 | 3.09 |

| | | | |
|---|---|---|---|
| D(_{v,50})= 1.14 m indicates that 50% of the particles have a size below 1.14 m | | | |

Once the size of the dopants has been homogenised, the following step in obtaining the paste consists in mixing the different components of the formulation, the zinc oxide and the ground dopants in a liquid medium.

This mixture was performed in a high shear mixer with Teflon coated rotor and stator; the mixing medium used was distilled water.

The substeps of the mixing step were the following: the dispersing additive was added into distilled water, it was mixed in a mixer at low speed, the ground dopants were added and mixed at low speed, ZnO was added and mixed at low speed, a binding additive was added and mixed at high shear.

The dispersing additive used was an ammonium polyelectrolyte whose active agent is acrylic acid (PMAA, polymethacrylic acid); the binding additive used was PVA itself (polyvinylacetate) dissolved in water.

Table 3 shows the optimal additives and optimal mixing conditions.

**Table 3. Optimisation of additives and mixing for preparing pastes**

| | Dispersing agent | Binder |
|---|---|---|
| Additives | 0.5% by weight of Darvan | 5% by weight of PVA (1:4 solution in water) |

| | | |
|---|---|---|
| Final high shear mixing: 10 minutes at 10000 rpm | | |

With these additives we prepared pastes of the different formulations proposed, EF2, EF5 and EF6. Once the established mixing time has elapsed, the homogenised paste was dried in an oven at 60 C for 24 hours and the powder obtained was sieved below 100 microns. The process was repeated for each of the formulations proposed.

The manufacture of varistors involves a standard dry pressing phase. Cylindrical parts of the different powders obtained were prepared by two-axis double effect pressing in tungsten carbide moulds.

Performing pressing curves of density versus pressure allowed determining optimal pressure values in order to reach a high percentage of green density (about 60%) and at the same time prevent high size contractions during the subsequent sintering of the parts. Said optimal value lies about 80 MPa.

Two possible sintering cycles were tested that are detailed below.

Sintering Cycle 0 (CS0): this was performed with the samples exposed to the air and in which T_{f} is the final sintering temperature and t_{f} is the sintering time at temperature T_{f}. In particular, T_{f}= 1140, 1160 and 1180 C with a sintering time of between 1 and 4 hours. The segments comprising said CSO cycle are described below in Table 4.

**Table 4: CSO Cycle: samples exposed to the air.**

| Segment | T (C) | Ramp speed (C/min) | Plateau time (min) |
|---|---|---|---|
| Ramp | 200 | 1 | - |
| Plateau | 200 | - | 30 |
| Ramp | 270 | 1 | - |
| Plateau | 270 | - | 30 |
| Ramp | 400 | 1 | - |
| Plateau | 400 | - | 30 |
| Ramp | T_{f} | 3 | - |
| Plateau | T_{f} | - | t_{f} |
| Ramp | 20 | 2-4 | - |

Sintering Cycle 1 (CS1): is a sintering cycle performed in two steps. The first step was performed up to a temperature of 600 C with the samples exposed to the air and its aim was to eliminate the organic additives used for processing the ceramic powder in a controlled manner. The second step was performed up to a sintering temperature of 1140 C for a time between 2 and 4 hours, which was performed with the samples covered in order to try to minimise the volatilisation of bismuth oxide (III). The segments comprising the two steps of said cycle CS1 are described below in Table 5.

**Table 5: CS1 Cycle**

| 1st step Cycle 1 | | | |
|---|---|---|---|
| Segment | T (C) | Ramp speed (C/min) | Plateau t (min) |
| Ramp | 150 | 1 | 1 - |
| Plateau | 150 | - | 180 |
| Ramp | 600 | 1 | 1 - |
| Plateau | 600 | - | 120 |
| Ramp | 20 | 2 | 2 - |
| 2nd step cycle 1 | | | |

| Segment | T (C) | Ramp speed (C/min) | Plateau t (min) |
|---|---|---|---|
| Ramp | 800 | 2-3 | 2-3 - |
| Ramp | 1140 | 1 | - |
| Plateau | 1140 | - | 120-500 |
| Ramp | 20 | 1 | 1 - |

The choice between these cycles depends on the precise size of the part, with smaller parts (usually for low voltage applications) requiring shorter cycles, whereas larger parts require longer cycles.

### Example 2: Study of the influence of dopant TiO₂

The following samples were prepared following the same steps as in Example 1 of the invention.

Sample V0Ti starts from the same initial oxides as sample EF2 defined in Example 1 but with 0% titanium. This is used as a reference, although formula EF2 describes a TiO₂ content between 0.2 and 3%, and compositions with this formula were also prepared without TiO₂ for use as references for comparison.

Sample V0.4Ti starts from the same initial oxides as sample EF2 defined in Example 1, but with 0.4% of TiO₂.

Sample V0.9Ti starts from the same initial oxides as sample EF2 defined in Example 1, but with 0.9% of TriO₂.

Sample V2.0Ti starts from the same initial oxides as sample EF2 defined in Example 1, but with 2.0% of TriO₂.

Sample V2.9Ti starts from the same initial oxides as sample EF2 defined in Example 1, but with 2.9% of TriO₂.

Sample V0.4Ti1Si starts from the same initial oxides as sample EF2 defined in Example 1, but with 0.4% of TiO₂ and 1% of SiO₂.

All cases show molar percents.

Table 6. Electrical response of the samples

**Table 6 shows the electrical response of the samples with different amounts of TiO₂ after sintering at 1140 C for 3 hours.**

| Samples | V_{1mA} (V/mm) | I_{L} ( A/cm²) | | G_{ZnO} (± 0.3 m) |
|---|---|---|---|---|
| V0Ti | 400 | 13 | 6 | 6.9 |
| V0.4Ti | 430 | 2 | 9 | 6.7 |
| V0.9Ti | 380 | 1.7 | 8 | 6.8 |
| V2.0Ti | 410 | 12 | 3 | 6.8 |
| V2.6Ti | 310 | 139 | 9 | 6.6 |

The addition of TiO₂ does not cause important changes in the breakdown voltage except for the sample with the greatest amount of TiO₂. This is consistent with the absence of visible changes in the average grain size of ZnO, also described in Table 6.

This example shows that with the method of the invention the addition of titanium dioxide does not affect the growth of the ZnO grains. This may be due to the presence of Sb₂O₃, thus the spinel phase of Zn_{2.33}Sb_{0.67}O₄ is created to be present in the microstructure, inhibiting the growth of the ZnO grain.

Table 6 shows how the incorporation of TiO₂ causes a reduction in the leakage currents of almost one order of magnitude for samples with values from 0.4 to 0.9 mol % of added TriO₂.

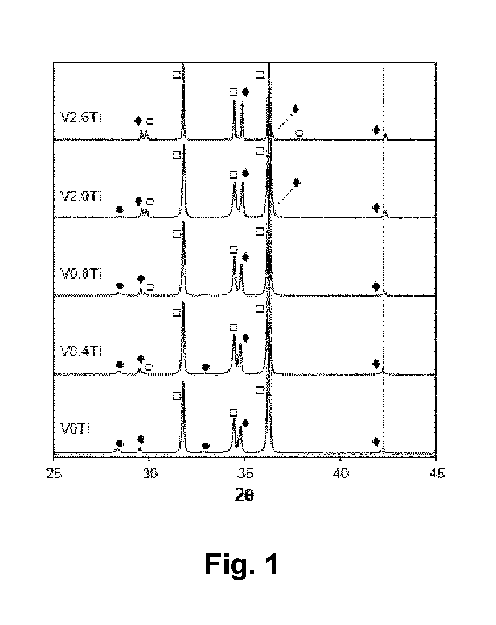

A detailed characterisation of the microstructure of the sintered samples was performed. Figure 1 shows a result of the XRD (X-ray diffraction) analysis and we can see that the gradual incorporation of TiO₂ leads to a different phase. The sample without titanium shows a diffraction peak corresponding to ZnO (JCPDS file n 36-1451), spinel Zn_{2.33}Sb_{0.67}O₄ (JCPDS file n 15-0687) and a third phase that can be identified with a bismuth-rich phase; in particular the centre of the widest signal corresponds to a pattern of the cubic non-stoichiometric compound BiO₂₋ₓ (JCPDS file n 47-1057). As the TiO₂ is incorporated, the signals corresponding to this last phase are wider and weaker, until they disappear completely. On the other hand, a new phase is developed which corresponds to another phase containing Bi, cubic pyrochloride Bi₂Ti₂O₇ (JCPDS file n 32-0118). The peak of this new structure becomes more visible as the TiO₂ increases. The peaks corresponding to the Zn_{2.33}Sb_{0.67}O₄spinel phase are progressively shifted to greater angles as TiO₂ is incorporated.

The dotted straight line around the isolated peak of the spinel phase in Fig. 1 shows the shift better. A Rietveld refinement was performed on the XRD data in order to better interpret the data.

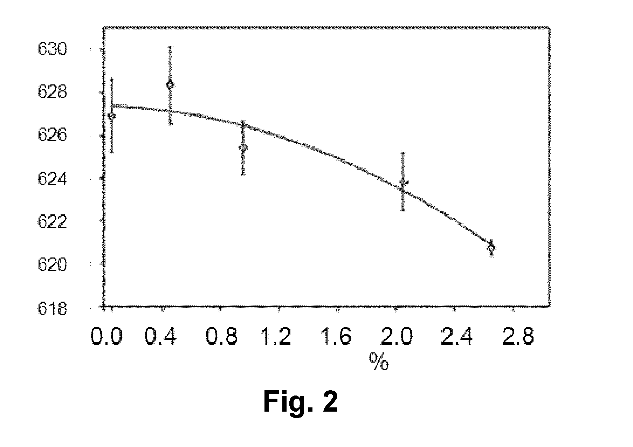

As shown in Fig. 2 the cell volume calculated for the spinel phase Zn_{2.33}Sb_{0.67}O₄ shows a decrease with the addition of TiO2. In other words, as the amount of TiO2 increases there are continuous changes in the parameters of the spinel cell. This shows a continuous and adequate incorporation of the titanium cations in the spinel structure.

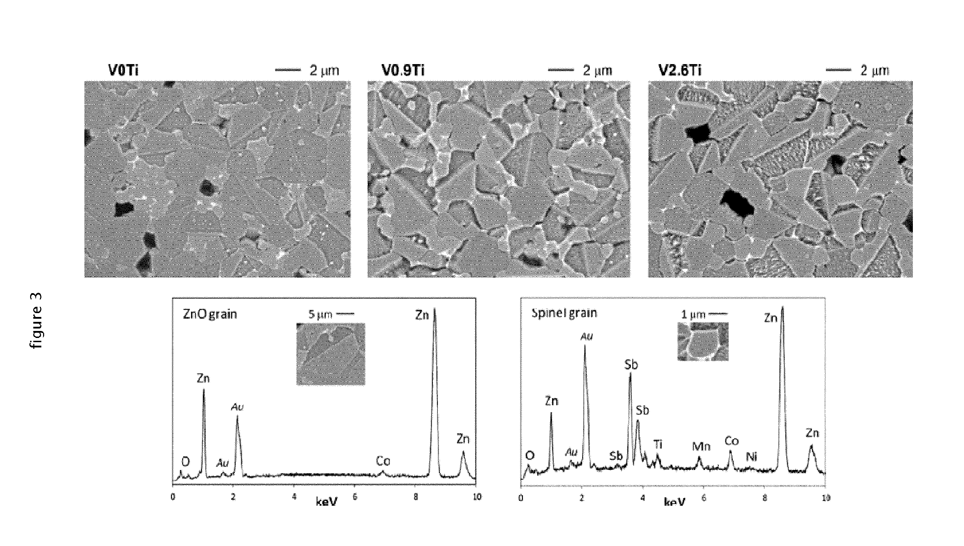

The samples were also characterised by electron microscopy. Figure 3 shows FESEM (Field Emission Scanning Electron Microscope) micrographies corresponding to samples with 0.9% and 2.6% of TiO₂, a similar microstructure was observed for the other compositions.

The same functional microstructure was obtained in all cases, with large regular grains of ZnO and smaller spinel grains embedded in the remnant bismuth phases.

Figure 3 shows an EDS spectrum corresponding to a sample with 0.4% TiO₂ but which can be considered to be representative, since the same basic characteristics were observed for all compositions. The titanium cation is shown to penetrate into the spinel structure, a fact that only occurs due to the method of the invention. A quantification of the EDS analyses developed in several spinel grains for each of the samples in which the amount of TiO₂ varies shows that when the amounts of TiO₂ are higher in the starting formulations, the amount dissolved in the Zn_{2.33}Sb_{0.67}O₄ spinel grains is higher.

The new mechanism for accommodating titanium cations within the spinel crystal lattice stabilises this phase against its reverse transformation to pyrochloride Bi₃Zn₂Sb₃O₁₄.

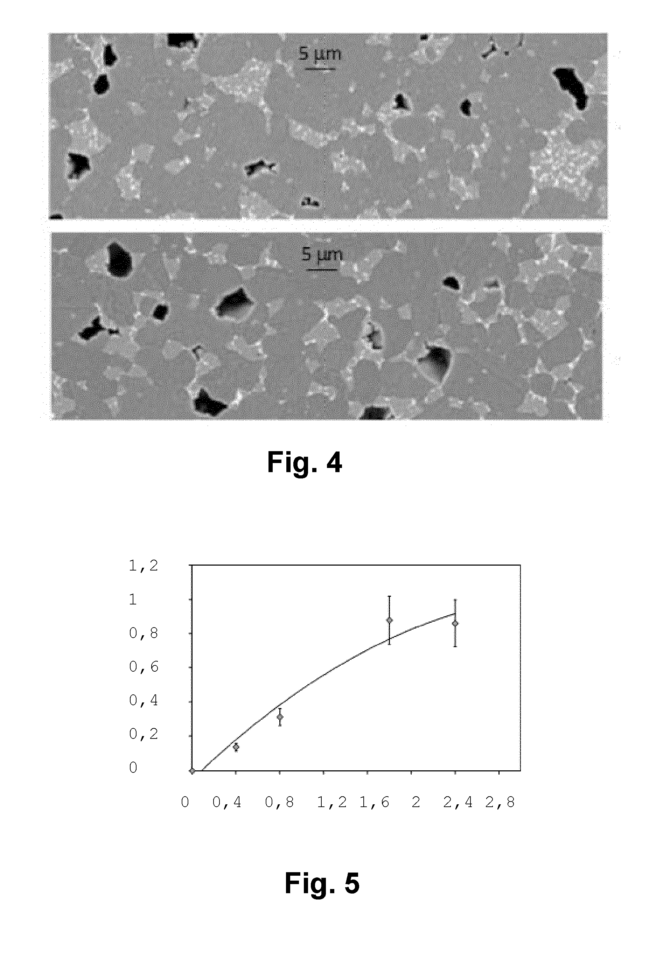

FE-SEM micrographies were used to measure both the amount and the size of the spinel grains in the sintered samples. The results of these analyses are shown in Fig. 4 and in Table 7.

**Table 7. Spinel grain data.**

| | G_{znO} (+-.3 m) | Gₛₚ (+-. 1 m) | Volume fraction of the Sp phase |
|---|---|---|---|
| V0Ti | 6.9 | 1.3 | 7 |
| V0.4Ti | 6.7 | 1.6 | 8 |
| V0.9Ti | 6.8 | 1.8 | 8 |
| V2.0Ti | 6.8 | 2.1 | 10 |
| V2.6Ti | 6.6 | 2.4 | 12 |

The spinel grains increase in size (also noticeable in the FESEM images of Fig. 3) and also the volumetric fraction of this secondary phase, which is greater the greater the amount of TiO₂, the transformation into Bi₃Zn₂Sb₃O₁₄ (pyrochloride) is progressively prevented, and therefore the spinel phase is present in the sintered microstructure and its grains may grow larger. The lower the amount of pyrochloride in the sintered microstructure the lower the leakage current, which explains the observed decrease in this parameter by adding TiO₂

For greater amounts of TiO₂ the leakage current increases and the data of Table 7 indicates that with the higher amounts of Ti the reverse transformation of spinel into pyrochloride is blocked, therefore the leakage current should decrease more. The explanation for this contradictory behaviour lies in the formation of a new Bi₂Ti₂O₇ phase.

The amount of this new compound increases with the addition of TiO2, as shown by XRD monitoring. As no Ti was detected inside the ZnO grains, the Ti cations not dissolved into the spinel grains will remain inside the frame of the Bi phases, eventually producing Bi₂Ti₂O₇. As we know the starting composition of the samples and have measured the percentage of the spinel phase in the sintered product (Fig. 4), we can use the data of Table 8 to estimate the amount of titanium that can remain in the bismuth frame.

**Table 8. EDS composition of the spinel particles of Sb observed in the different samples. The analysis is normalized to 9 cations with formula Zn₇Sb₂O₁₂**

| Samples | Zn (+-3%) | Sub (+-7%) | Mn ( +-11%) | Co(+-10%) | Ti (+-11%) | Ni (+-16%) |
|---|---|---|---|---|---|---|
| V0Ti | 6.83 | 1.30 | 0.27 | 0.40 | 0.00 | 0.20 |
| V0.4Ti | 6.51 | 1.26 | 0.26 | 0.46 | 0.26 | 0.25 |
| V0.9Ti | 6.58 | 1.12 | 0.24 | 0.46 | 0.37 | 0.23 |
| V2.0Ti | 6.47 | 1.28 | 0.25 | 0.49 | 0.40 | 0.21 |
| V2.6Ti | 6.23 | 0.94 | 0.21 | 0.46 | 0.99 | 0.17 |

This estimation is illustrated in Fig. 5. This data shows that the amount of Ti in the bismuth frame increases with the amount of TiO₂ added, leading to more Bi₂Ti₂O₇. This pyrochloride Bi₂Ti₂O₇ structure acts as an ion conductor: its increased presence in the varistor microstructure leads to the increase in values of the leakage current, as shown in the samples.

In short, with the method of the invention, especially due to the starting oxides and the proposed sintering phases, the TiO₂ can be used as a dopant in varistor formulations to decrease the leakage current by one order of magnitude. The amount of dopant must be controlled and is limited due to the formation of a secondary conductive phase.

The effect of SiO₂ on the varistor's leakage current was studied. If TiO₂ was not present in the formulation we found no improvements in the leakage current if it was only doped with SiO₂.

An optimal composition was found comprising the EF2 formulation in which the TiO₂ represents 0.4%mol and 1%mol of SiO₂.

Table 9 shows the electrical and microstructural characteristics of the V0.4Ti1Si composition. The leakage current is reduced by two orders of magnitude less than in the reference system V0Ti.

**Table 9. Electric and microstructural characteristics of the different samples**

| Samples | V_{1mA} (V/mm) | V_{1mA} (V/mm) | I_{L} ( A/cm²) | | G_{znO} (± 0.3 m) | G_{sp*} (± 0.1 m) |
|---|---|---|---|---|---|---|
| V0Ti | 400 | 400 | 13 | 36 | 6.9 | 1.3 |
| V0.4Ti | 415 | 415 | 2 | 39 | 6.7 | 1.6 |
| V04Ti1Si | 490 | 490 | 0.4 | 45 | 5.2 | 1.5 |

| | | | | | | |
|---|---|---|---|---|---|---|
| * Sp antimony spinel Zn_{2.33}sb_{0.67}O₄ | | | | | | |

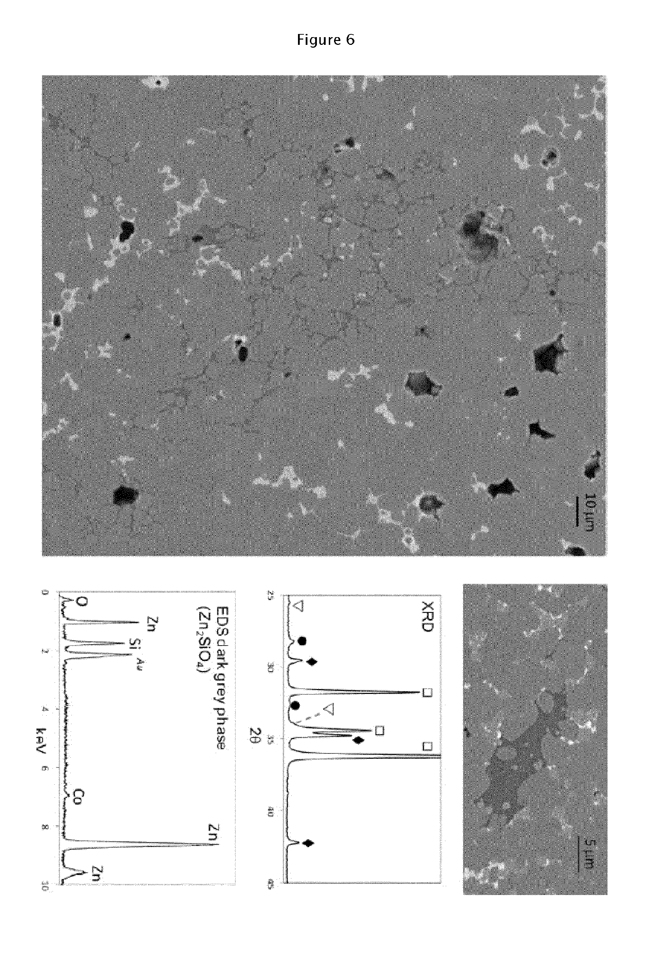

Figure 6 shows FESEM images of the characterisation of the microstructure of the optimised composition. An XRD analysis shows the presence of willemite Zn₂SiO₄ signals (JCPDS file n 37-1485) between the phases. As well as the antimony spinel particles, the appearance of this second type of spinel phase leads to a decrease in the size of ZnO grains and therefore to a greater breakdown voltage (as shown in Table 9).

Figure 6 shows darker regions around the ZnO grains. Distributed as groups interconnected as a network, these regions interrupt the connectivity of the frame of the Bi-rich phases (the white regions in the SEM images). The EDS confirms the composition of the dark groups as corresponding to the spinel formula Zn₂SiO₄ with a small amount of dissolved cobalt. Neither was silicon detected outside these regions with the EDS, nor inside the Zn grains (which do show Co) or in the antimony spinel.

We can conclude that the addition of SiO₂ does not interfere with the stabilisation of the spinel Zn_{2.33}Sb_{0.67}O₄ developed by incorporating titanium. The size of these antimony spinel grains confirms the latter. Table 9 shows that the spinel grains with doped with Ti Zn_{2.33}Sb_{0.67}O₄ have the same size with or without SiO₂ in the starting formulation.

In short, the stabilisation of the antimony spinel by doping with Ti and the interruption of the connectivity of the Bi frame by doping with Si reduces the leakage current.

## Claims

1. A method for preparing varistors comprising the steps of:
a) Forming an aqueous solution comprising ZnO at a molar percentage between 88% and 97%, using as dopants at least Bi₂O₃ at a molar percentage comprised between 0.2% and 5%, Sb₂O₃ at a molar percentage comprised between 1% and 4.5% and TiO₂ at a molar percentage comprised between 1% and 4%; a dispersing additive and a binding additive
b) Drying the mixture from step a)
c) Sieving it
d) Pressing the result
e) Sintering it in a cycle defined by a final temperature comprised between 1140 C and 1180 C for a time comprised between 1-8 hours.

2. A method according to claim 1 in which the dopants comprise SiO₂ in a mole percentage comprised between 0.25% and 1.25%.

3. A method according to any of claims 1-2 where before step a) the method comprises a step of grinding the dopants in order to achieve a homogenous size of the ZnO and the dopants.

4. A method according to any of claims 1-3 where in the solution of strep a) the solid content lies in the interval of 55-60% by weight of solids.

5. A method according to any of claims 1-4 where in step a) of preparing the solution, we first add the dispersing additive into the distilled water and mix it at low speed, then we add the ground dopants and mix at low speed, we add the ZnO and mix at low speed, add the binding additive and mix at high shear speed.

6. A method according to any of claims 1-5 where the sintering step has a final sintering temperature comprised between 1140 C and 1180 C and a time comprised between 1 and 4 hours with the samples exposed to the air.

7. A method according to any of claims 1-5 where the sintering step is performed in two steps, the first of which is performed up to a temperature of 600 C with the samples exposed to the air and the second step is performed up to a sintering temperature of 1140 C for between 2 and 4 hours, and which is performed with the samples covered.

8. The varistor obtained by the method according to any of claims 1-7.

9. The use of the varistors obtained by the method according to any of claims 1-7 in the construction of discreet components for microwave circuits.
